# EUROPEAN PATENT APPLICATION

(11) **EP 4 803 959 A1**
(43) Date of publication of application: **09.09.2026**
(21) Application number: 26160866.5
(22) Date of filing: 26.02.2026
(51) Int. Cl.: G03B 17/14, G02B 7/14, G03B 17/56, G02B 7/02, G02B 7/16

(54) **ACCESSORY MOUNT AND ACCESSORY APPARATUS**

(30) Priority: 03.03.2025 JP 2025032710
(71) Applicant: Canon Kabushiki Kaisha, Tokyo 146-8501 (JP)
(72) Inventor: MIZUSHIMA, Masayasu, Ohta-ku, Tokyo, 146-8501 (JP)
(74) Representative: TBK

(57) **Abstract**

An accessory mount (301, 401, 501, 601, 701) is attachable to and detachable from a camera mount (201) having a camera mount surface (211) and a convex portion (203) protruding from the camera mount surface. The accessory mount includes an accessory mount surface (111) that contacts the camera mount surface in a central axis (O) direction of the accessory mount. The accessory mount surface has a noncontact portion (302, 402, 502, 602, 702) formed to avoid contact with the convex portion in the central axis direction, a circumferential direction, and a radial direction in a state where the accessory mount surface contacts the camera mount surface.

## Description

### BACKGROUND

### Field of the Technology

The present disclosure relates to an accessory mount and an accessory apparatus.

### Description of Related Art

The above accessory apparatus includes an accessory mount, as disclosed in Japanese Patent Application Laid-Open No. 2012-78783 and Chinese Patent Application Publication No. 116661220. After the accessory mount is inserted into a camera mount provided on the image pickup apparatus in an insertion phase, the accessory apparatus is attached to the image pickup apparatus by rotating the accessory apparatus.

### SUMMARY

The present disclosure in its first aspect provides an accessory mount as specified in claims 1 to 17.

The present disclosure in its second aspect provides an accessory apparatus as specified in claim 18 and 19.

Features of the present disclosure will become apparent from the following description of embodiments with reference to the attached drawings. The following description of embodiments will be described by way of example.

### BRIEF DESCRIPTION OF THE DRAWINGS

Fig. 1 is a block diagram illustrating the configuration of an imaging system according to prior art and this embodiment.
Fig. 2 is an exploded perspective view of a mount portion according to the conventional imaging system.
Figs. 3A and 3B illustrate a lens mount in the conventional lens apparatus.
Figs. 4A and 4B illustrate a camera mount in a camera according to prior art and this embodiment.
Figs. 5A and 5B illustrate a part of a lens mount according to a first embodiment.
Figs. 6A and 6B illustrate a part of a lens mount according to a second embodiment.
Fig. 7 illustrates a part of a lens mount according to a third embodiment.
Fig. 8 illustrates a part of a lens mount according to a fourth embodiment.
Fig. 9 illustrates a part of the lens mount according to the fourth embodiment.
Fig. 10 illustrates the entire lens mount according to the first embodiment.

### DESCRIPTION OF THE EMBODIMENTS

Referring now to the accompanying drawings, a description will be given of embodiments according to the present disclosure.

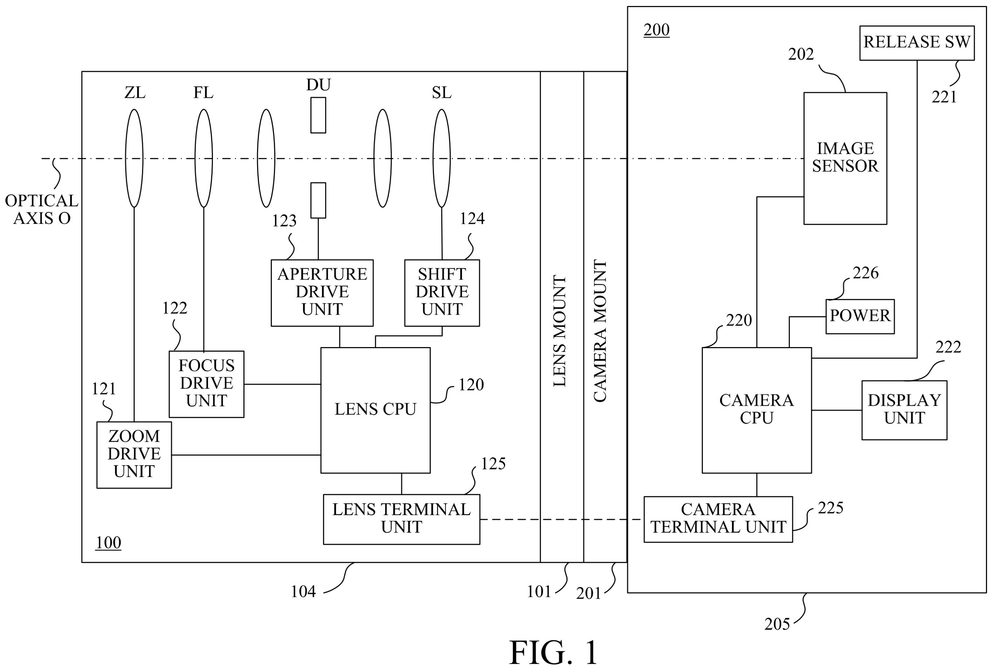

Fig. 1 illustrates the configuration of an imaging system including a lens apparatus (optical apparatus or interchangeable lens) 100 as an accessory apparatus and a camera 200 as an image pickup apparatus. The lens apparatus 100 is attachable to and detachable from the camera 200. More specifically, the lens apparatus 100 includes a lens mount (accessory mount) 101, and the lens apparatus 100 is attached to the camera 200 by coupling the lens mount 101 to a camera mount 201 provided on the camera 200.

The camera 200 includes an image sensor 202 and a camera CPU 220. The image sensor 202 includes a photoelectric conversion element, such as a CCD sensor or CMOS sensor, and converts an optical image (object image) formed by the imaging optical system (described below) within the lens apparatus 100 into an imaging signal as an electrical signal. The camera CPU 220 causes the image sensor 202 to capture an image when a user turns on a release switch 221 provided on the camera 200, and generates image data from the imaging signal output from the image sensor 202. The camera CPU 220 also displays the generated image data on a display unit 222 provided on the rear surface, etc. of the camera 200, or records it on an unillustrated recording medium (such as a semiconductor memory).

The camera CPU 220 can also communicate with a lens CPU 120 in the lens apparatus 100 via a camera terminal unit 225 provided on the camera 200 and a lens terminal unit 125 provided on the lens apparatus 100. The camera CPU 220 also performs photometry (light metering) and focus detection using the imaging signal or image data, and calculates the exposure time of the image sensor 202 and the aperture value of the imaging optical system based on the photometry result, and calculates the focus drive amount of the imaging optical system based on the focus detection result. The camera CPU 220 transmits an aperture drive command including an aperture value, etc. and a focus drive command including a focus drive amount to the lens CPU 120.

A power supply 226 such as a secondary battery is provided within the camera 200, and the image sensor 202 and camera CPU 220 operate by receiving power from the power supply 226. Part of the power from the power supply 226 is also supplied to the lens apparatus 100 and is used to operate the lens CPU 120 and the imaging optical system.

The lens apparatus 100 includes an optical system (imaging optical system) and a holding member (barrel) 104 that holds (houses) it. The imaging optical system includes a zoom lens ZL that moves in the optical axis direction, which is the direction in which the optical axis O extends, for zooming, a focus lens FL that moves in the optical axis direction for focusing, a shift lens SL that moves in a direction orthogonal to the optical axis O for image stabilization, and another lens. The imaging optical system further includes an aperture unit DU that adjusts a light amount.

The lens apparatus 100 further includes a zoom drive unit 121 that drives the zoom lens ZL, a focus drive unit 122 that drives the focus lens FL, an aperture drive unit 123 that drives the aperture unit DU, and a shift drive unit 124 that drives the shift lens SL. As described above, the lens CPU 120 causes the aperture drive unit 123 to drive the aperture unit DU and the focus drive unit 122 to drive the focus lens FL according to the aperture drive command and focus drive command transmitted from the camera CPU 220.

The lens CPU 120 also causes the shift drive unit 124 to drive the shift lens SL according to camera shake, such as hand shake, detected by a shake sensor (not illustrated) provided in the lens apparatus 100. The lens CPU 120 also causes the zoom drive unit 121 to drive the zoom lens ZL when the user rotates a zoom operation ring (not illustrated) provided in the lens apparatus 100.

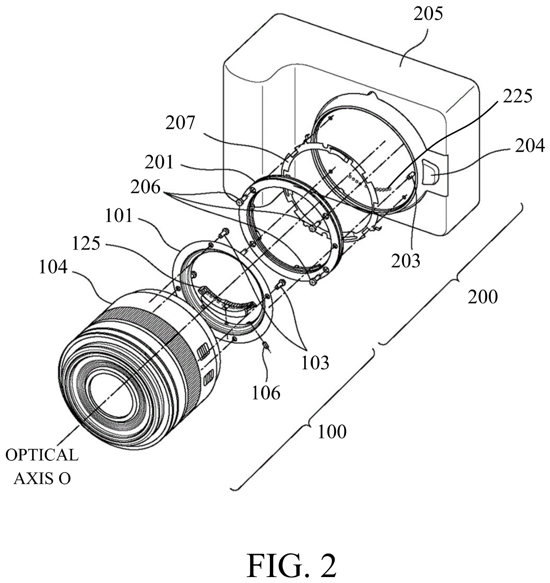

Fig. 2 illustrates an exploded view of the mount portions of the lens apparatus 100 and the camera 200 illustrated in Fig. 1. The camera mount 201 is fixed to a housing 205 of the camera 200 with four screws 206 via a mount biasing member 207. The mount biasing member 207 is a member that generates a biasing force that retracts the bayonet claws (described later) of the lens mount 101 toward the camera mount. The camera terminal unit 225 is fixed to the housing 205 so that it is positioned inside the camera mount 201.

The housing 205 also holds a lock pin 203 as a convex portion, movably between a protruding position where it protrudes from the mount surface of the camera mount 201 (referred to as a camera mount surface hereinafter) toward the object side (lens side) and a retracted position where it retracts further toward the image side. The lock pin 203 is spring-biased toward the protruding position. The camera mount 201 has three bayonet claws spaced apart in its circumferential direction.

On the other hand, the lens mount 101 is fixed to the lens barrel 104, which serves as the housing of the lens apparatus 100, with four screws 103. The lens mount 101 includes a mount surface (referred to as a lens mount surface hereinafter) and three bayonet claws as coupling portions spaced apart in the circumferential direction.

The lens terminal unit 125 is fixed to the inner circumferential portion of the lens mount 101 with a plurality of screws 106.

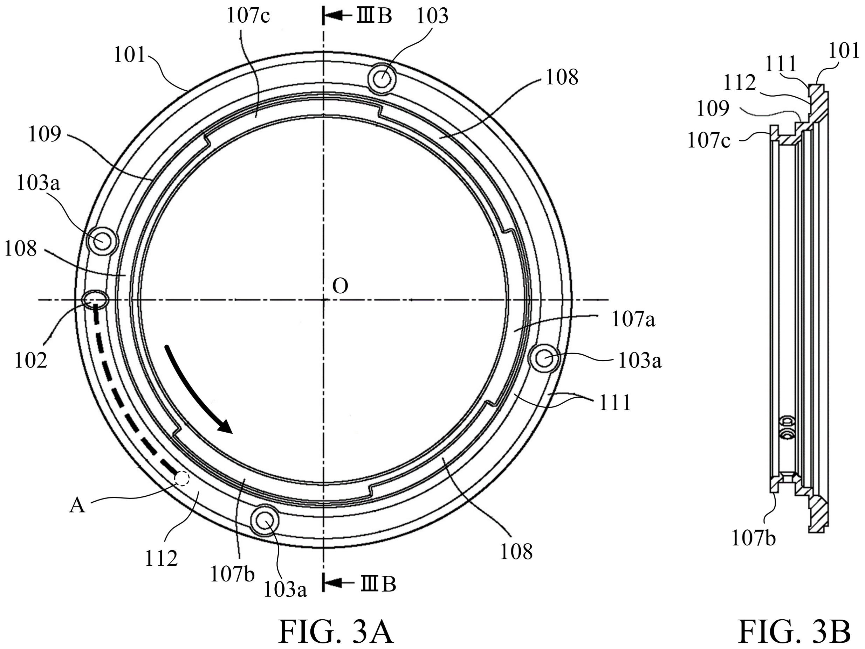

Fig. 3A illustrates the lens mount 101 with the conventional configuration viewed from the image side (camera side). Fig. 3B illustrates a cross section of the lens mount 101 taken along a line IIIB-IIIB in Fig. 3A.

The lens mount 101 includes, in order from the lens barrel side (right side of Fig. 3B), a lens mount surface 111 serving as an accessory mount surface, a radial engagement portion 109, and bayonet claws 107a, 107b, and 107c. The lens mount surface 111 is formed as a flat surface that extends in the circumferential direction toward the camera side (left side of Fig. 3B). A circumferential groove portion 112 that is recessed toward the barrel side is formed in part of the lens mount surface 111 (between the inner and outer circumferential portions).

The radial engagement portion 109 has an outer circumferential portion surface that is engageable with the inner circumferential portion of the radial engagement portion (described below) of the camera mount 201. The bayonet claws 107a to 107c are formed at three circumferential locations on the lens mount 101, protruding in the radial direction outward from positions in the radial direction inward from the lens mount surface 111.

As illustrated in Fig. 3A, the lens mount 101 with a conventional configuration includes a lock hole portion 102 formed as a concave portion at one location in the circumferential direction on the lens mount surface 111 (circumferential groove portion 112). The lock hole portion 102 is formed as a bottomed concave shape that opens toward the image side on the lens mount surface 111 and has an inner diameter that is engageable with a lock pin 203 inserted inside it in the circumferential direction (the rotation direction of the lens mount 101).

The lens mount 101 has four screw holes 103a into which the above four screws 103 are inserted.

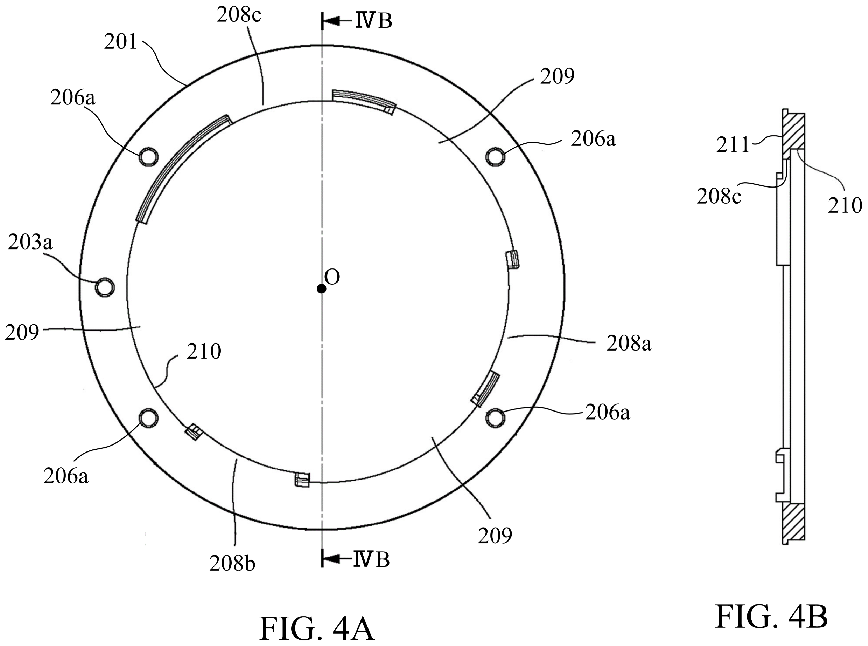

Fig. 4A illustrates the camera mount 201 viewed from the housing side. Fig. 4B illustrates a cross section of the camera mount 201 taken along a line IVB-IVB in Fig. 4A.

The camera mount 201 includes a camera mount surface 211, a radial engagement portion 210, and bayonet claws 208a, 208b, and 208c, in that order from the housing side, which is the right side of Fig. 4B. The camera mount surface 211 is formed as a flat surface facing the lens side. The radial engagement portion 210 has an inner circumferential surface that is engageable with the outer circumferential surface of the radial engagement portion 109 of the lens mount 101 described above.

The bayonet claws 208a to 208c are formed to protrude in the radial direction inward at three locations around the inner circumferential portion of the camera mount 201.

As illustrated in Fig. 4A, the camera mount 201 has a pin hole 203a through which the lock pin 203 passes, and four screw hole portions 206a into which the four screws 206 described above are inserted.

The lens apparatus 100 is attached to the camera 200 as follows. First, the lens apparatus 100 is disposed relative to the camera 200 so that the lens mount 101 is in the insertion phase (insertion state as the first state), which is the first phase around the optical axis (around the central axis) relative to the camera mount 201. In the insertion phase, the lock pin 203 faces the lens mount surface 111 at a position A in Fig. 3A.

Next, the lens apparatus 100 is moved closer to the camera 200 in the optical axis direction (central axis direction), and the lens mount 101 in the insertion phase is inserted into the camera mount 201. At this time, the bayonet claws 107a to 107c of the lens mount 101 pass through the space 209 between the bayonet claws 208a to 208c of the camera mount 201. Similarly, the bayonet claws 208a to 208c pass through the space 108 between the bayonet claws 107a to 107c. In a case where the lens mount surface 111 comes into contact with the camera mount surface 211 in this way, the lock pin 203, which had been in the protruding position until then, comes into contact with the lens mount surface 111 (the bottom surface of the circumferential groove portion 112) and is pushed into the retracted position.

Next, the lens mount 101 (lens apparatus 100) is rotated around the optical axis relative to the camera mount 201 (camera 200) in the direction indicated by the arrow in Fig. 3A up to the mounting phase as the second phase (the mounting phase as the second state), in which the position of the lock hole portion 102 coincides with the position of the lock pin 203. Until the lens mount 101 reaches the mounting phase, the mount biasing member 207 provided on the rear surface of the bayonet claws 208a to 208c retracts the bayonet claws 107a to 107c toward the camera, thereby pressing the lens mount surface 111 against the camera mount surface 211. Thus, the lens mount 101 is coupled to the camera mount 201 in the optical axis direction.

In the mounting phase, the lock pin 203, which has been moved to a protruding position by the spring bias, enters the lock hole portion 102 and is engaged with the lock hole portion 102 in the circumferential direction. That is, the lock hole portion 102 has an inner dimension that contacts the lock pin 203 at least in the circumferential direction of the lens mount 101. This prevents (restricts) circumferential rotation of the lens mount 101 from the mounting phase toward the insertion phase.

Thus, the coupling and rotation lock of the lens mount 101 and camera mount 201, that is, the attachment of the lens apparatus 100 to the camera 200, is completed.

When detaching the lens apparatus 100 from the camera 200, the user presses the release operation member 204 provided on the camera 200 to move the lock pin 203 from the protruding position to the retracted position and retract it from the lock hole portion 102. This allows the rotation of the lens mount 101 toward the insertion phase relative to the camera mount 201. The lens apparatus 100 is then pulled out from the camera 200 toward the object by passing the bayonet claws 107a to 107c of the lens mount 101, which has been rotated to the insertion phase, through the space 209 between the bayonet claws 208a to 208c of the camera mount 201.

When the lens mount 101 rotates relative to the camera mount 201 between the insertion phase and the mounting phase, the lens mount surface 111 (the bottom surface of the circumferential groove portion 112) slides against the tip of the lock pin 203, as illustrated by the thick broken line in Fig. 3A. When the lock pin 203 moves between the protruding position and the retracted position, the side surface (outer circumferential surface) of the lock pin 203 slides against the inner surface of the lock hole portion 102.

This causes wear on the lens mount surface 111 (the bottom surface of the circumferential groove portion 112), the lock pin 203, and the lock hole portion 102, and generates wear powder. As wear on the lock pin 203 or lock hole portion 102 progresses, the engagement of the lock pin 203 with the lock hole portion 102 weakens, which could cause the lens mount 101 to rattle in the rotational direction relative to the camera mount 201. Considering manufacturing errors, forming the lock hole portion 102 to fit the lock pin 203 could increase the difficulty and cost of manufacturing.

In a case where the lens mount has no lock hole into which the lock pin is engaged, priority may be given to suppressing wear on the lock pin on the camera side rather than locking the rotation of the lens mount to the camera mount. For example, when using a support member such as a tripod to secure the camera for imaging, there is no risk of the lens mount rotating even if the rotation of the lens mount is not locked relative to the camera mount, so suppression of wear on the lock pin is given priority.

The lens mount according to the embodiments described below has configurations that can avoid such sliding and wear between the lens mount and lock pin, and reduce the manufacturing difficulty and manufacturing cost of the lens mount. That is, the lens mount according to each embodiment includes a noncontact portion (or retracted portion) formed to avoid contact with the convex portion (lock pin 203) protruding from the camera mount toward the lens mount when the lens mount is coupled to the camera mount. Here, "formed to avoid contact with the convex portion" does not include cases where the noncontact portion is slightly spaced from the convex portion (by, for example, several tens of µm), but then they contact each other after the permissible play between the lens mount and the camera mount is eliminated. Rather, the noncontact portion is formed to avoid contact at all even when the permissible play between the lens mount and the camera mount is eliminated (so as to retract from the convex portion).

The lens mount according to each embodiment may be mounted on a lens apparatus having a lock mechanism (restricting portion) that prevents (restricts) rotation of the lens mount relative to the camera mount by coming into contact with a portion of the camera mount other than the convex portion in a circumferential direction, without using a lock pin, as disclosed in Japanese Patent Application Laid-Open No. 2012-78783. More specifically, the lens mount may be mounted on a lens apparatus that has a lens-side engagement portion engageable with a camera-side engagement portion provided on the camera mount as a portion other than the convex portion.

The mounting state in which the lens mount according to each embodiment is located at the mounted phase refers to a state in which all of the bayonet claws on the lens side are biased toward the camera side by the mount biasing members on the bayonet claws on the camera side, and a state in which the electrical contacts of the lens apparatus are in contact with corresponding electrical contacts on the camera side, enabling communication between the lens apparatus and the camera. It also refers to a state in which the indicators on the lens apparatus and the camera are positioned in the same phase, and a state in which a variety of operating members such as buttons on the lens apparatus are in the normal positions. In addition, it refers to a state in which rotation of the lens apparatus is restricted by a lock mechanism that uses no lock pin, such as that disclosed in Japanese Patent Application Laid-Open No. 2012-78783.

### FIRST EMBODIMENT

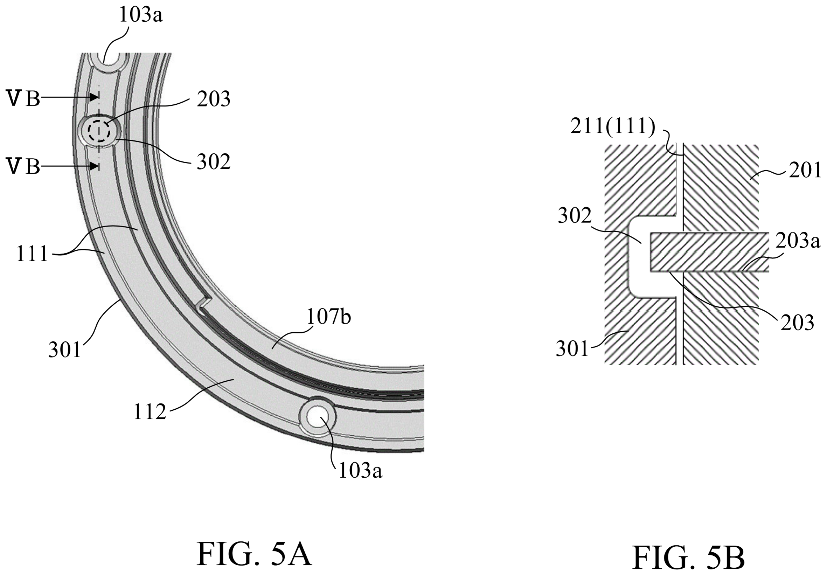

Fig. 5A illustrates a part of a lens mount 301 according to a first embodiment, when viewed from the image side. In Fig. 5A, the lock pin 203 in the mounting phase is indicated by an alternate long and short dash line. Fig. 5B illustrates a cross section of the lens mount 301, camera mount 201, and lock pin 203 taken along line VB-VB in Fig. 5A.

The lens mount 301 according to this embodiment further includes the lens mount surface 111 (circumferential groove portion 112), bayonet claws 107b (107a, 107c), screw hole 103a, and the like, which are illustrated in Figs. 3A and 3B. However, the circumferential groove portion 112 may be omitted.

The lens mount 301 according to this embodiment has a hole portion 302 formed as a noncontact portion that is formed to avoid contact with the lock pin 203 protruding from the camera mount 201 in the mounting phase. Similar to the lock hole portion 102 illustrated in Fig. 3A, the hole portion 302 has a bottomed hole shape (having a bottom surface facing the convex portion) that opens toward the image side on the lens mount surface 111. However, the hole portion 302 has inner dimensions (inner diameters in the circumferential and radial directions, and a depth from the lens mount surface to the bottom surface in the optical axis direction) that are larger than the outer dimensions (diameter and protruding height) of the lock pin 203 in each of the circumferential, radial, and optical axis directions of the lens mount 301. Therefore, it does not come into contact with the tip or side of the lock pin 203 in the protruding direction when it is located at the protruding position during the mounting phase.

Generally, a protrusion amount of the lock pin 203 from the camera mount surface 211 is approximately 1.0 mm. Thus, the depth of the lock hole portion 102 (distance in the optical axis direction) may be 1.0 mm or more. The depth of the lock hole portion 102 may also be 1.2 mm or more, or 1.5 mm or more.

The opening shape of the hole portion 302 may be elliptical as illustrated in Fig. 5A or circular. The hole portion 302 may have a depth that contacts the tip of the lock pin 203 when it is located at the protruding position or a position close to the protruding position, as long as it does not come into contact with the side of the lock pin 203 in the circumferential and radial directions. However, it may not come into contact (slide) with the tip of the lock pin 203 in a mounting ongoing state from the insertion phase to just before the mounting phase.

The hole portion 302 may have a bottomless hole shape that penetrates the lens mount 301 from the lens mount surface 111 to the rear surface. The hole portion 302 may also have a shape that has a bottom and opens in the radial direction outward or inward. From the perspectives of ease of manufacturing and cost reduction, the hole portion 302 may include a through-hole, and may include a bottomed hole from the perspective of suppressing the passage of unnecessary light.

The lens mount 301 according to this embodiment is the same as the conventional lens mount 101 in that the tip of the lock pin 203 slides against the lens mount surface 111 when rotating relative to the camera mount 201 between the insertion phase and the mounting phase. However, in the mounting phase, it does not come into contact with the lock pin 203 located within the hole portion 302. In other words, since the lock pin 203 and the lens mount 301 do not slide against each other as they move between the protruding position and the retracted position in the mounting phase, wear on the lock pin 203 and the lens mount 301 (particularly the hole portion 302) is avoided.

### SECOND EMBODIMENT

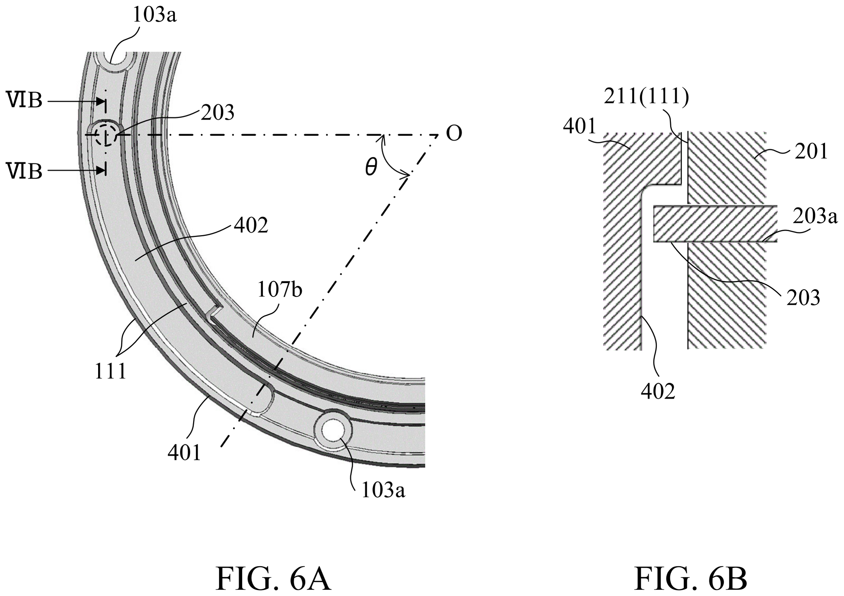

Fig. 6A illustrates a portion of a lens mount 401 according to a second embodiment, when viewed from the image side. Again, the lock pin 203 located in the mounting phase is indicated by an alternate long and short dash line. Fig. 6B illustrates a cross section of the lens mount 401, camera mount 201, and lock pin 203 taken along a line VIB-VIB in Fig. 6A.

The lens mount 401 according to this embodiment also has the lens mount surface 111 (circumferential groove portion 112), bayonet claws 107b (107a, 107c), screw hole 103a, and the like, as illustrated in Figs. 3A and 3B.

The lens mount 401 according to this embodiment has a groove portion 402 as a noncontact portion that is formed to avoid contact with the lock pin 203 located at the protruding position, from the insertion phase to the mounting phase (i.e., in both the ongoing mounting state and the mounted state on the camera mount). The groove portion 402 has a bottom shape similar to the hole portion 302 according to the first embodiment, but has a circumferential length (inner dimension) that is longer than the moving length of the lock pin 203 from the insertion phase to the mounting phase. The groove portion 402 has inner dimensions (inner diameter and depth) that are larger than the outer dimensions (diameter and protruding height) of the lock pin 203 in the radial and optical axis directions. Therefore, the groove portion 402 does not come into contact with the tip or side surface of the lock pin 203 from the insertion phase to the mounting phase.

Generally, a rotation angle θ of the lens mount (movement angle of the lock pin) from the insertion phase to the mounting phase is approximately 55° (e.g., 60°). Thus, as illustrated in Fig. 6A , the groove portion 402 may be formed in an angular range of 55° or more around the optical axis of the lens mount 401 and greater than the rotation angle θ from the insertion phase of the lens mount 401 (when it starts to contact the camera mount surface) to the mounting phase.

The groove portion 402 may have a bottomless hole shape that penetrates the lens mount 401 from its lens mount surface 111 to its back surface. The groove portion 402 may also have a bottomed shape that opens in the radial direction outward or inward.

The lens mount 401 according to this embodiment neither slides nor comes into contact with the lock pin 203 disposed at the groove portion 402 in any phase, from the insertion phase to the mounting phase, thereby avoiding wear on the lock pin 203 and the lens mount 401.

### THIRD EMBODIMENT

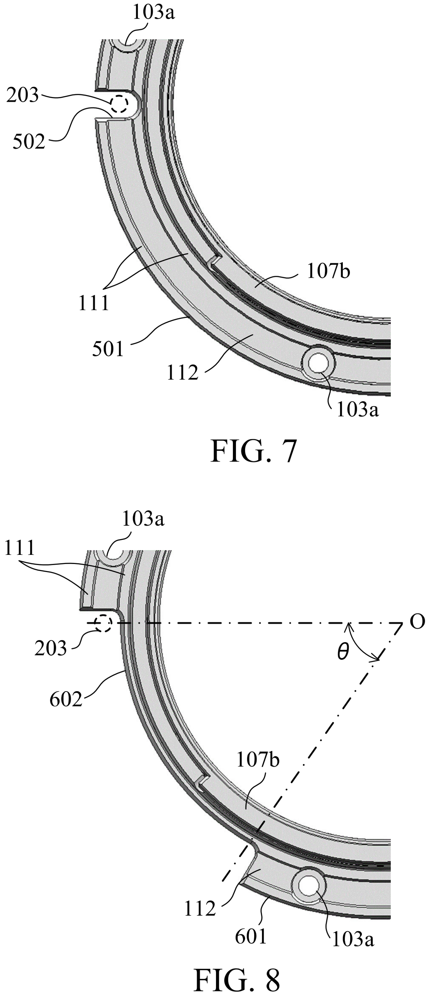

Fig. 7 illustrates a portion of a lens mount 501 according to a third embodiment, when viewed from the image side. The lock pin 203 in the mounting phase is also indicated by an alternate long and short dash line in Fig. 7.

The lens mount 501 according to this embodiment also has the lens mount surface 111 (circumferential groove portion 112), bayonet claws 107b (107a, 107c), screw hole 103a, and the like, as illustrated in Figs. 3A and 3B.

The lens mount 501 according to this embodiment has a U-shaped opening 502 as a noncontact portion that is formed to avoid contact with the lock pin 203 protruding from the camera mount 201 in the mounting phase. The U-shaped opening 502 is formed as a notch portion that penetrates the lens mount 501 from the lens mount surface 111 to the back surface and opens in the radial direction outward (a portion where there is no partition wall from the radial outside). The circumferential inner dimension (inner diameter) of the U-shaped opening 502 and the inner dimension from the opening to the opposite surface in the radial direction are larger than the diameter of the lock pin 203. Thus, it does not contact the tip or side surface of the lock pin 203 in the mounting phase.

Depending on the shape of the lens mount, the U-shaped opening 502 may be formed to open radially inward.

The lens mount 501 according to this embodiment is the same as the conventional lens mount 101 in that the tip of the lock pin 203 slides against the lens mount surface 111 when rotating relative to the camera mount 201 between the insertion phase and the mounting phase. However, it does not come into contact with the lock pin 203 located within the U-shaped opening 502 in the mounting phase. In other words, since the lock pin 203 and lens mount 501, which move between the extended and retracted positions during the mounting phase, do not slide against each other, wear on the lock pin 203 and lens mount 501 (particularly the opening 502) is avoided.

### FOURTH EMBODIMENT

Fig. 8 illustrates a portion of a lens mount 601 according to a fourth embodiment when viewed from the image side. Fig. 8 also illustrates the lock pin 203 in the mounting phase with an alternate long and short dash line.

The lens mount 601 according to this embodiment also has the lens mount surface 111 (circumferential groove portion 112), bayonet claws 107b (107a, 107c), screw hole 103a, and the like, as illustrated in Figs. 3A and 3B.

The lens mount 601 according to this embodiment has a U-shaped groove portion 602 as a noncontact portion that is formed to avoid contact with the lock pin 203, which is located at the protruding position from the insertion phase to the mounting phase. The U-shaped groove portion 602 is formed as an arc-shaped notch portion that penetrates the lens mount 601 from the lens mount surface 111 to the back surface and opens radially outward of the lens mount 601. The U-shaped groove portion 602 has a circumferential length (inner dimension) that is longer than the moving distance of the lock pin 203 from the insertion phase to the mounting phase. The inner dimension of the U-shaped groove portion 602 from its radial opening to the opposite surface is larger than the diameter of the lock pin 203. Thus, the groove portion 602 does not contact the tip or side surface of the lock pin 203 from the insertion phase to the mounting phase.

Depending on the shape of the lens mount, the U-shaped groove may be formed so that it opens radially inward.

In this embodiment, as in the second embodiment, the U-shaped groove portion 602 may be formed in an angular range of 55° or more around the optical axis of the lens mount 601 and greater than the rotation angle of the lens mount 601 from the insertion phase to the mounting phase, as illustrated in Fig. 8.

The lens mount 601 according to this embodiment does not slide against or contact the lock pin 203 disposed at the U-opening groove portion 602 in any phase between the insertion phase and the mounting phase, thereby avoiding wear on the lock pin 203 and the lens mount 601.

### FIFTH EMBODIMENT

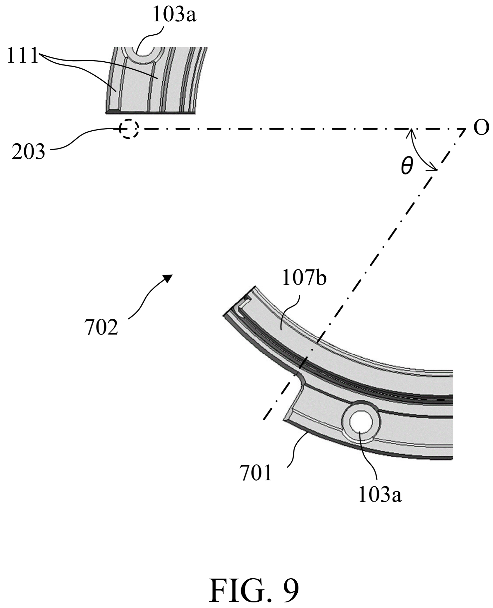

Fig. 9 illustrates a portion of a lens mount 701 according to a fifth embodiment when viewed from the image side. The lock pin 203 in the mounting phase is also indicated by an alternate long and short dash line in Fig. 9.

The lens mount 701 according to this embodiment also has the lens mount surface 111 (circumferential groove portion 112), bayonet claws 107b (107a, 107c), screw hole 103a, and the like, as illustrated in Figs. 3A and 3B.

The lens mount 701 according to this embodiment has a space portion 702 as a noncontact portion that is formed to avoid contact with the lock pin 203 located at the protruding position from the insertion phase to the mounting phase. The space portion 702 is space formed between one end and the other end of the lens mount 701, which has a discontinuous C-shape in the circumferential direction when viewed from the image side. The space portion 702 has a circumferential length longer than the moving angle of the lock pin 203 from the insertion phase to the mounting phase.

As in the second and fourth embodiment, this embodiment may form the space portion 702 in an angular range of 55° or more around the optical axis of the lens mount 701, as illustrated in Fig. 9, and greater than the rotation angle of the lens mount 701 from the insertion phase to the mounting phase.

The lens mount 701 according to this embodiment does not slide against the lock pin 203 located within the space portion 702 in any phase between the insertion phase and the mounting phase. This avoids wear on the lock pin 203 and the lens mount 701.

Providing the space portion 702 in the lens mount 701 as in this embodiment can reduce the weight compared to the lens mount 101 illustrated in Fig. 3A and ensure sufficient space for arranging the components of the camera to which the lens apparatus is attached.

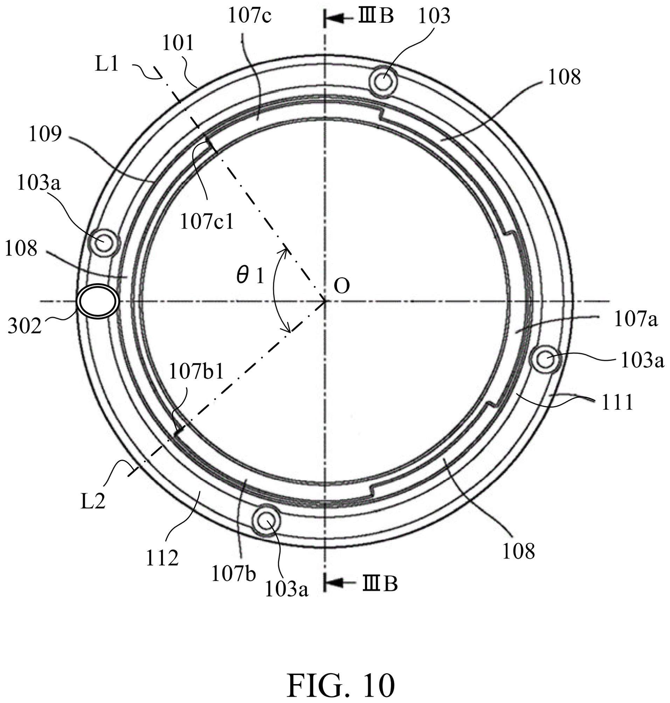

The lens mount according to each embodiment may have the following configuration. Fig. 10 illustrates the entire lens mount 101 according to the first embodiment when viewed from the optical axis direction. The lens mount 101 has a bayonet claw 107c as a first engagement portion engageable with the camera mount and a bayonet claw 107b as a second engagement portion. In a state where the lens mount 101 is attached to the camera mount (mounting phase), the bayonet claws 107c and 107b are located on both sides of the convex portion (hole portion 302) in the circumferential direction. When viewed from the optical axis direction (central axis direction) in the mounting phase, let θ1 be an angle formed by a line L1 passing through an end 107c1 on a side closer to the convex portion in the bayonet claw 107c and the central axis (optical axis O) of the lens mount 101 and a line L2 passing through an end 107b1 on a side closer to the convex portion in the bayonet claw 107b and the central axis. Then, the following inequality may be satisfied: $90 ° < θ 1 < 180 °$

In Fig. 10, θ1 = 96°. The upper limit of this inequality may be set to 120° or 100°.

The lens mount configuration according to each embodiment may also be applied to an accessory mount provided on an accessory apparatus other than a lens apparatus that is attachable to and detachable from a camera. Examples of such accessory apparatus include an adapter (intermediate adapter) or extender for connecting a camera and a lens apparatus, or a cap for protecting the camera mount. The adapter may be one that has a function for converting the communication method between the camera and lens apparatus, or one that includes an optical element such as a lens or optical filter.

While the present disclosure has been described with reference to embodiments, it is to be understood that the present disclosure is not limited to the disclosed embodiments. The scope of the following claims is to be accorded the broadest interpretation so as to encompass all such modifications and equivalent structures and functions.

## Claims

1. An accessory mount (301, 401, 501, 601, 701) attachable to and detachable from a camera mount (201) having a camera mount surface (211) and a convex portion (203) protruding from the camera mount surface, the accessory mount comprising:
an accessory mount surface (111) that contacts the camera mount surface in a central axis (O) direction of the accessory mount,
**characterized in that** the accessory mount surface has a noncontact portion (302, 402, 502, 602, 702) formed to avoid contact with the convex portion in the central axis direction, a circumferential direction, and a radial direction in a state where the accessory mount surface contacts the camera mount surface.

2. The accessory mount according to claim 1, **characterized in that** the noncontact portion is provided at a position facing the convex portion in a state where the accessory mount is attached to the camera mount.

3. The accessory mount according to claim 1 or 2, **characterized in that** the noncontact portion is provided at a position facing the convex portion in a state where the accessory mount is in a process of being attached to the camera mount.

4. The accessory mount according to any one of claims 1 to 3, **characterized in that** the noncontact portion is provided at a position facing the convex portion both in a state where the accessory mount is in a process of being attached to the camera mount and in a state where the accessory mount is attached to the camera mount.

5. The accessory mount according to claim 4, **characterized in that** the noncontact portion is provided at all positions facing the convex portion, from the state where the accessory mount is in the process of being attached to the camera mount to the state where the accessory mount is attached to the camera mount.

6. The accessory mount according to claim 4 or 5, **characterized in that** an angular range in which the noncontact portion is provided is equal to or greater than a rotation angle between a state where the accessory mount surface starts to contact the camera mount surface and a state where when the accessory mount is attached to the camera mount.

7. The accessory mount according to any one of claims 4 to 6, **characterized in that** an angular range in which the noncontact portion is provided is equal to or greater than 55°.

8. The accessory mount according to any one of claims 1 to 7, **characterized in that** the noncontact portion is a hole portion into which the convex portion is inserted in a state where the accessory mount is attached to the camera mount.

9. The accessory mount according to claim 8, **characterized in that** the hole portion has a bottom surface that faces the convex portion.

10. The accessory mount according to claim 9, **characterized in that** a distance between the bottom surface and the accessory mount surface in the central axis direction is 1.0 mm or more.

11. The accessory mount according to any one of claims 1 to 10, **characterized in that** the noncontact portion is a groove portion into which the convex portion is inserted in a state where the accessory mount is in a process of being attached to the camera mount.

12. The accessory mount according to claim 11, **characterized in that** the groove portion has a bottom surface facing the convex portion.

13. The accessory mount according to claim 12, **characterized in that** a distance between the bottom surface and the accessory mount surface in the central axis direction is 1.0 mm or more.

14. The accessory mount according to any one of claims 1 to 13, **characterized in that** the noncontact portion is a notch portion that opens in the radial direction.

15. The accessory mount according to any one of claims 1 to 14, **characterized in that** the accessory mount surface is discontinuous in the circumferential direction,
wherein the noncontact portion is space formed between one end and another end of the accessory mount surface in the circumferential direction.

16. The accessory mount according to any one of claims 1 to 15, **characterized in that** the accessory mount includes a restricting portion that restricts rotation of the accessory mount relative to the camera mount by coming into contact with a portion of the camera mount other than the convex portion in a circumferential direction.

17. The accessory mount according to any one of claims 1 to 16, further comprising a first engagement portion (107c) and a second engagement portion (107b), which are engageable with the camera mount,
**characterized in that** in a state where the accessory mount is attached to the camera mount, the first and second engagement portions are located on both sides of the convex portion in a circumferential direction,
wherein in the state where the accessory mount is attached to the camera mount and when viewed from the central axis direction, the following inequality is satisfied:${90}^{∘} < θ 1 < {180}^{∘}$
where θ1 is an angle formed by a line L1 passing through an end (107c1 ) on a side closer to the convex portion in the first engagement portion and the central axis of the accessory mount and a line L2 passing through an end (107b1) on a side closer to the convex portion of the second engagement portion and the central axis.

18. An accessory apparatus (100) comprising:
the accessory mount (301, 401, 501, 601, 701) according to any one of claims 1 to 17; and
a lens (ZL, FL, SL).

19. An accessory apparatus (100) comprising:
the accessory mount (301, 401, 501, 601, 701) according to any one of claims 1 to 17,
**characterized in that** the accessory apparatus is attachable to and detachable from a lens apparatus (100).
